# EUROPÄISCHE PATENTSCHRIFT

(11) **EP 0 506 725 B1**
(45) Veröffentlichungstag und Bekanntmachung des Hinweises auf die Patenterteilung: **25.05.1994**
(21) Anmeldenummer: 91900804.5
(22) Anmeldetag: 18.12.1990
(51) Int. Cl.: G01J 1/42

(54) **VERFAHREN UND VORRICHTUNG ZUM MESSEN VON LASERLEISTUNG**
PROCESS AND DEVICE FOR MEASURING LASER POWER
PROCEDE ET DISPOSITIF POUR MESURER LA PUISSANCE LASER

(30) Priorität: 21.12.1989 DE 3942293
(43) Veröffentlichungstag der Anmeldung: 07.10.1992
(73) Patentinhaber: Thyssen Stahl Aktiengesellschaft, 47166 Duisburg (DE)
(72) Erfinder: KRAMER, Reinhard, Dr.-Ing., W-6102 Pfungstadt (DE); WISSENBACH, Kurt, Dr. rer.nat., W-5100 Aachen (DE); BRIESCH, Paul, Dipl.-Ing., W-5100 Aachen (DE)
(74) Vertreter: Cohausz & Florack Patentanwälte
(86) Internationale Anmeldenummer: EP9002224
(87) Internationale Veröffentlichungsnummer: WO9110117

(56) Entgegenhaltungen:
- EP-A- 0 050 159

## Beschreibung

Die Erfindung bezieht sich auf ein Verfahren zum Messen der Laserleistung, bei dem ein elektrisch beaufschlagbarer, einen temperaturabhängigen elektrischen Widerstand aufweisender Meßdraht hin- und hergehend quer über den Strahlquerschnitt relativbewegt wird.

Um die Laserleistung zu messen, ist es allgemein bekannt, den Strahl vollständig von einem Detektor absorbieren zu lassen. Während der Meßzeit ist ein Bearbeiten eines Werkstücks mit dem Laserstrahl nicht möglich. Es ist auch allgemein bekannt, einen Teil des Laserstrahls mit einem reflektierenden Element oder mit einer teiltransmissiven Optik zur Messung heranzuziehen, so daß die Messung grundsätzlich auch während der Bearbeitung des Werkstücks erfolgen kann. Allerdings können das reflektierende Element bzw. die teiltransmissive Optik den Laserstrahl beeinträchtigen oder selbst durch zu hohe Strahlungsleistungen bzw. Intensitäten zerstört oder beschädigt werden. Daher ist das Messen zwischen der Fokussieroptik des Laserstrahls und dem Werkstück in der Regel nicht möglich.

Aus der EP-B1-0 050 159 ist ein Verfahren mit den eingangs genannten Verfahrensschritten bekannt. Bei diesem Verfahren wird die Temperaturabhängigkeit des elektrischen Widerstands des Meßdrahtes ausgenutzt, um eine Meßgröße für die Leistung des Laserstrahls zu gewinnen. Diese Meßgröße wird allerdings durch Störeinflüsse beeinträchtigt, beispielweise durch unterschiedliche, von der Konvektion abhängige Wärmeübergangswiderstände.

Der Erfindung liegt daher die Aufgabe zugrunde, ein Verfahren der eingangs genannten Art so zu verbessern, daß bei einer Online-Messung der Laserleistung frei von Störeinflüssen gemessen werden kann.

Diese Aufgabe wird dadurch gelöst, daß der Meßdraht in einer seine thermische Zeitkonstante wesentlich unterschreitenden Zeit relativ zum Strahlquerschnitt bewegt wird, daß ein dem Meßdraht dicht parallel benachbarter, ebenfalls elektrisch beaufschlagbarer und einen temperaturabhängigen elektrischen Widerstand aufweisender Kompensationsdraht verwendet wird, der einen im Vergleich zum Meßdraht geringen Absorptionsgrad für die Laserstrahlung hat, und daß die Meßwerte beider Drähte ermittelt und ihr Quotient als von der Konvektionskühlung beider Drähte unabhängiges Maß der Laserleistung errechnet wird.

Bei diesem Verfahren wird davon ausgegangen, daß die von dem Meßdraht absorbierte Strahlungsleistung in Form von Wärme an die Umgebung des Meßdrahtes abgegeben wird und sich dabei ein Gleichgewichtszustand einstellt. Die Wärmeabgabe erfolgt durch Strahlung und Konvektion, wobei der Strahlungsanteil wegen der vergeichsweise geringen Temperatur des Meßdrahts vernachlässigbar klein ist. Die Wärmeabgabe durch Konvektion hängt von dem Wärmelibergangswiderstand α des Meßdrahtes ab. Dieser Wärmeübergangswiderstand α ist geringfügig abhängig von der Temperatur und umgekehrt proportional zum Drahtdurchmesser bzw. abhänging von der Querschnittsgeometrie des verwendeten Meßelements. Des weiteren ist die Kühlung des Meßdrahtes durch Konvektion nicht als konstant anzusehen, weil sich an der Meßstelle Strömungen des Konvektionskühlstroms einstellen, also Luftströmungen bzw. Prozeßgasströmungen, wie sie zur Beeinflussung des Bearbeitungsprozesses an der Bearbeitungsstelle eines Werkstücks verwendet werden. Diese Strömungen führen zu einer stärkeren Abkühlung des Meßdrahtes, so daß der mit ihm erreichte Meßwert zu klein ist. Die Strahlungsleistung wird zu klein angezeigt. Mit Hilfe des Kompensationsdrahtes kann nun dafür gesorgt werden, daß der Einfluß der Konvektionskühlung auf das Meßergebnis, also der Einfluß des Wärmeübergangswiderstandes α auf die Kühlung des Meßdrahtes ausgeschaltet wird. Dabei ist infolge der Nachbarschaft der beiden Drähte davon auszugehen, daß der Einfluß der Luftströmung auf die Kühlung beider Drähte jeweils gleich groß ist. Setzt man die Meßwerte beider Drähte ins Verhältnis, werden der Luftströmungseinfluß bzw. auch die Abhängigkeit des Wärmeübergangswiderstandes α von der konvektiven Kühlung ausgeschaltet. Von Bedeutung ist dabei, daß der Kompensationsdraht einen im Vergleich zum Meßdraht geringen Absoprtionsgrad für die Laserstrahlung hat, so daß eine Änderung des Meßwertes des Kompensationsdrahtes im wesentlichen auf Konvektionskühlung zurückzuführen ist. Andererseits wirkt sich eine Änderung der Laserleistung nur auf den Meßwert des Meßdrahtes aus.

Die elektrische Beaufschlagung der beiden Drähte erfolgt zweckmäßigerweise derart, daß der Meßstrom in beiden Drähten konstant gehalten und die infolgedessen an den Drähten abfallenden Spannungen als Meßwerte zur Quotientenbildung herangezogen werden. Der konstante Strom verursacht dem Widerstand des jeweiligen Drahtes entsprechende Spannungsabfälle. Infolgedessen ist der Spannungsabfall des Meßdrahtes derjenigen Widerstandsänderung proportional, die durch die Temperaturänderung des Drahtes infolge der Absorption von Laserstrahlung verursacht ist.

Um zu erreichen, daß der Meßstrom des Meßdrahtes das Meßergebnis möglichst wenig beeinflußt, wird das Verfahren so durchgeführt, daß der Meßstrom in den Meßdraht eine im Vergleich zur von letzterem absorbierten Laserstrahlleistung geringe Leistung einbringt.

Um zu berücksichtigen, daß der Kompensationsdraht einen gewissen Prozentsatz der Laserleistung absorbiert, wird das Verfahren so durchgeführt, daß der Kompensationsstrom in den Kompensationsdraht eine im Vergleich zur von letzterem absorbierten Laserstrahlleistung hohe Leistung einbringt. In diesem Fall ist der mit Hilfe des Kompensationsdrahtes ermittelte Meßwert unabhängig von der durch diesen Draht absorbierten Laserleistung.

Um den Einfluß der Umgebungstemperatur auf das Meßergebnis auszuschalten, wird so verfahren, daß von den an den Drähten abfallenden Spannungen jeweils eine aufgrund der Umgebungstemperatur abfallende Grundspannung vor der Quotientenbildung abgezogen wird.

Die Erfindung bezieht sich des weiteren auf eine Vorrichtung zum Messen der Laserleistung, mit einem elektrisch beaufschlagten, einen temperaturabhängigen elektrischen Widerstand aufweisenden Meßdraht oder dergleichen, der hin- und hergehend quer über den Strahlquerschnitt relativbeweglich ist. Um zu erreichen, daß das Meßergebnis frei von den vorbeschriebenen Nachteilen ist, ist die Vorrichtung so ausgebildet, daß dem Meßdraht dicht parallel benachbart ein einen temperaturabhängigen elektrischen Widerstand aufweisender Kompensationsdraht angeordnet ist, daß die beiden Drähte jeweils einen unterschiedlichen Absorptionsgrad für die Laserstrahlung haben, daß beide Drähte jeweils an eine Stromquelle und an ein Meßgerät angeschlossen sind, und daß eine die Meßwerte der Meßgeräte verarbeitende Dividierschaltung mit nachgeschalteter Anzeigeeinrichtung vorhanden ist. An der Anzeigevorrichtung kann das von den Einflüssen des Wärmeübergangswiderstandes und der Strömungsgeschwindigkeit bereinigte Meßergebnis abgelesen und/oder für Zwecke der Prozeßsteuerung weiterverwendet werden. Vorzugsweise ist die Stromquelle eine Konstantstromquelle und die Meßgeräte sind Spannungsmesser.

Die Vorrichtung ist im Schwenkbereich eines hin- und herbewegten Laserstrahls stationär angeordnet, so daß also die Relativbeweglichkeit zwischen dem Laserstrahl und den Drähten durch die Strahlbewegung erreicht wird. Der Einsatz einer Vorrichtung mit stationären Drähten ist dann besonders vorteilhaft, wenn bei dem Bearbeitungsvorgang des Werkstücks ohnehin ein hin- und herbewegter bzw. gescannter Laserstrahl verwendet werden muß.

Um das Meßsignal zu vergrößern, sind die Drähte schräg zur relativen Schwenkbahn des Laserstrahls angeordnet.

Der Meßdraht hat einen möglichst großen Absorptionskoeffizienten bzw. der Kompensationsdraht absorbiert im Vergleich zum Meßdraht aufgrund eines geringen Absorptionsgrades möglichst wenig Laserleistung, wenn als Meßdraht ein geschwärzter und als Kompensationsdraht ein blanker Nickeldraht gleicher Abmessungen vorhanden ist.

Es ist vorteilhaft, daß im Relativbewegungsbereich der Drähte eine erzwungene Gasströmung vorhanden ist. Damit kann eine Anpassung der Vorrichtung bzw. seines Meßbereichs an die Gegebenheiten erreicht werden.

Beide Meßgeräte werden dadurch in einfacher Weise derart beeinflußt, daß Schwankungen der Umgebungstemperatur keine Auswirkungen auf die Anzeige bzw. auf die Meßwerte für die Laserleistung haben, indem daß außerhalb des relativen Schwenkbereichs des Laserstrahls ein elektrisch beaufschlagter, einen temperaturabhängigen Widerstand aufweisender Referenzdraht vorhanden und an die Meßgeräte in die Schwankungen der Umgebungstemperatur ausgleichender Weise angeschlossen ist.

Die Erfindung wird anhand von in der Zeichnung dargestellten Ausführungsbeispielen erläutert. Es zeigen
- Fig. 1: eine Seitenansicht einer Meßeinrichtung, die mit einer Fokussiereinrichtung des Laserstrahls zusammengebaut ist, in schematischer Darstellung,
- Fig. 2: eine Aufsicht auf die Meßdrahtanordnung, und
- Fig. 3: ein Blockschaltbild der Meßvorrichtung gemäß der Erfindung.

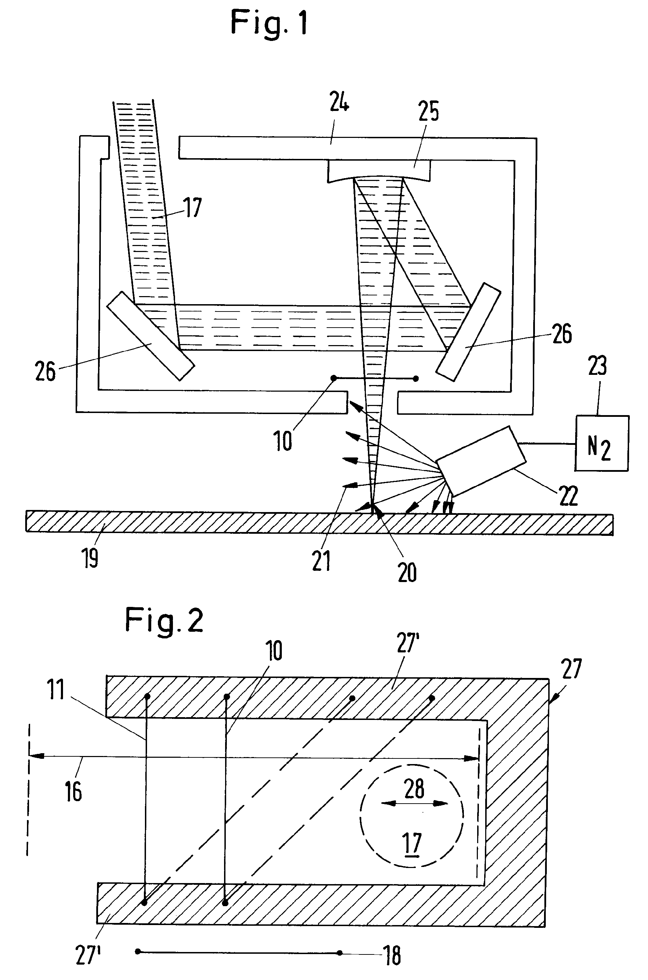

Figur 1 zeigt schematisch ein mit einem Laserstrahl 17 eines nicht dargestellten Lasers zu bearbeitendes Blech 19, das beispielsweise mit einem anderen Blech verschweißt werden soll. Der Schweißvorgang erfolgt mit großer Laserleistung, z.B. größer als 1000 W, um hohe Schweißgeschwindigkeiten zu erzielen. Die Bearbeitungsstelle 20 wird mit einem Prozeßgas 21 von einer Düse 22 beblasen, der das Prozeßgas, z.B. Stickstoff (N₂), aus einem Vorratsbehälter 23 zugeführt wird.

Der Laserstrahl 17 wird mit Hilfe einer in einem Spiegelkasten 24 untergebrachten, auf die Bearbeitungsstelle 20 fokussierenden Fokussieroptik benutzt, die schematisch durch einen Fokussierspiegel 25 dargestellt ist, dem der Laserstrahl 17 über Umlenkspiegel 26 zugeleitet wird.

Innerhalb des Spiegelkastens 24 ist ein Meßdraht 10 angeordnet, und zwar quer zum fokussierten Laserstrahl 17. Die Anordnung des Drahtes 10 relativ zum Laserstrahl kann beliebig sein, sich also nach den baulichen Gegebenheiten richten. Von Vorteil ist, daß der Draht 10 am bereits fokussierten Laserstrahl 17 mißt. Infolgedessen haben sämtlich vor der Messung vorhandenen Leistungsverluste keinen Einfluß auf das Meßergebnis, beispielsweise die Reflexionsverluste aller optischen Elemente 25, 26.

Wenn der Laserstrahl 17 senkrecht zur Darstellungsebene hin- und herbeweglich ist, was beispielweise mit einem Polygonspiegel erreicht werden könnte, wobei die in Figur 1 dargestellten Spiegel 25, 26 sich senkrecht zur Darstellungsebene erstreckende Spiegelleisten sein müßten, so überstreicht der Laserstrahl 17 den zu ihm quergespannten Draht 10. Dieser kann dann stationär angeordnet sein. Ist der Laserstrahl 17 selbst stationär, so müßte der Draht 10 relativ zum Laserstrahl 17 hin- und herbewegt werden. Figur 2 stellt den relativen Schwenkbereich 16 des Laserstrahls 17 dar, wobei der Draht 10 von einer Halterung 27 getragen ist, die U-förmig ausgebildet ist und es erlaubt, daß der Laserstrahl 17 zwischen den Schenkeln 27' in den Richtungen des Doppelpfeils 28 hin- und herbewegt wird. Die beiden Schenkel 27' halten den Draht 10 quer zum Laserstrahl 17 und zu dessen Bewegungsbahn gespannt. Figur 2 zeigt noch, daß die Drähte 10, 11 entsprechend den gestrichelten Darstellungen schräg zur relativen Schwenkbahn des Laserstrahls 17 angeordnet sein können, so daß dessen Haltezeit auf den Drähten 10, 11 größer ist und sich dadurch ein größeres Meßsignal ergibt.

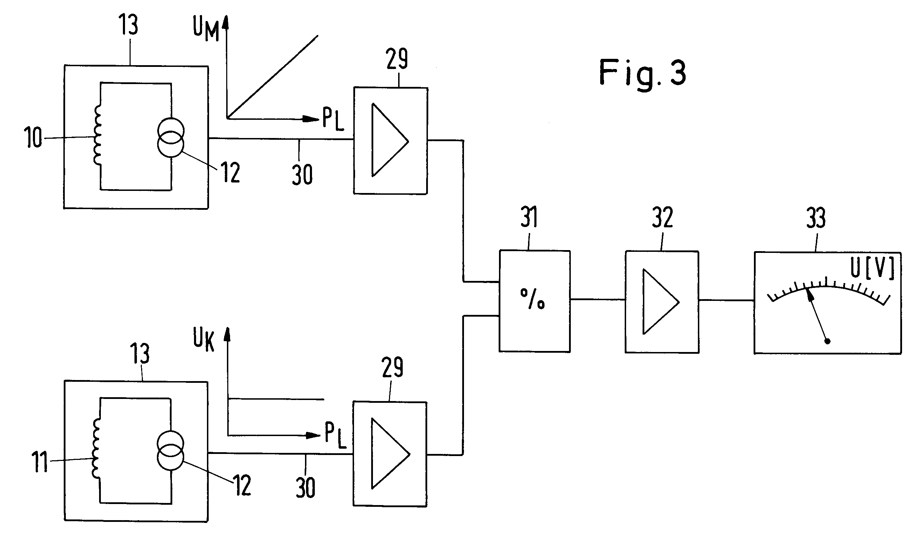

Der Draht 10 ist geschwärzt und hat daher einen hohen Absorptionsgrad ε für die Laserstrahlung. Ihm benachbart ist ein blanker Draht 11, der demgemäß einen geringen Absorptionsgrad ε für die Laserstrahlung hat. Beide Drähte, also der geschwärzte Draht 10 als Meßdraht und der blanke Draht 11 als Kompensationsdraht sind gemäß Figur 3 elektrisch beaufschlagbar, und zwar von je einer Stromquelle 12, die als Konstantstromquelle ausgebildet ist. Die Konstantstromquelle wird beispielsweise durch einen Operationsverstärker mit nachgeschaltetem Leistungsfeldeffekttransistor realisiert. Anstelle der Konstantstromquelle können auch eine Konstantspannungs- bzw. Leistungsquelle eingesetzt werden, wodurch jedoch der Meß- bzw. Regelaufwand größer wird.

In dem Schaltkreis der Figur 3 ist ein nicht näher dargestelltes Meßgerät 13 vorhanden, das als Spannungsmesser ausgebildet ist und die an den Drähten 10, 11 abfallenden Spannungen U_{M} bzw. U_{K} mißt. Die Meßgeräte 13 übergeben ihre Meßwerte jeweils an Verstärker 29, wobei oberhalb der Verbindungsleitung 30 jeweils die Abhängigkeit der Meßwerte bzw. der abfallenden Spannungen U_{M} = f(P_{L}) und U_{K} = f(P_{L}) dargestellt ist. Es ist ersichtlich, daß der schwarze Meßdraht 10 mit wachsender Laserleistung größere Meßwerte liefert, während der blanke Kompensationsdraht 11 im Idealfall einen von der Laserleistung unabhängigen Meßwert liefert. Die aufgrund unterschiedlicher Strömungskühlung der Drähte 10, 11 sich ergebenden Spannungen sind in die Diagramme der Figur 3 nicht eingezeichnet, da sie in beiden Fällen gleich groß sind und sich infolgedessen bei der Bildung des Quotienten Q mit einer Dividierschaltung 31 aufheben. An die Dividierschaltung 31 ist ein Verstärker 32 angeschlossen, der seinerseits einen Wert für die Anzeigeeinrichtung 33 liefert, die beispielweise ein Drehspulelement ist.

Die Drähte 10, 11 sind beispielsweise Reinnickeldrähte mit einem konstanten Durchmesser von z.B. 0,05 mm. Ein derartiger Draht ist beispielweise 6 cm lang, so daß er im Vergleich zur Querschnittsfläche des Laserstrahls 17 nur eine geringe Absorptionsfläche aufweist, den Laserstrahl also nur wenig abschattet. Der Meßdraht 10 ist z.B. mit Schwefelsäure und Kaliumsulfit geschwärzt und absorbiert bei einer Wellenlänge von 10,6 µm etwa 100 % der auftreffenden Laserstrahlung, hat also einen Absorptionsgrad von 1. Demgegenüber ist der Kompensationsdraht blank und besitzt einen Absorptionsgrad von 0,1.

Der von der Stromquelle 13 an den Meßdraht 10 gelieferte Meßstrom beträgt beispielweise 10 mA, so daß bei einem Widerstand von 3,4 Ω eine elektrische Leistung von nur 0,34 mW eingebracht wird. Das ist wenig, verglichen mit den etwa 300 mW absorbierter Strahlungsleistung, die der Meßdraht 10 bei einer Strahlleistung von 1500 W absorbiert. Der Einfluß des Meßstroms auf das Meßergebnis ist daher vernachlässigbar. Andererseits muß die elektrische Leistung des Meßstroms der Stromquelle 12 für den Kompensationsdraht 11 wegen der von letzterem absorbierten Strahlungsleistung vergleichsweise groß sein, was z.B. bei 300 mA der Fall ist.

In Figur 2 ist noch ein Referenzdraht 18 vorhanden, der in nicht dargestellter Weise ebenfalls elektrisch beaufschlagbar ist und einen temperaturabhängigen Widerstand aufweist. Dieser außerhalb des Schwenkbereichs 16 des Laserstrahls 17 angeordnete Referenzdraht 18 ist an die Meßgeräte 13 angeschlossen und liefert der Umgebungstemperatur entsprechende Meßwerte. Diese werden von den Meßwerten U_{K} bzw. U_{M} abgezogen, so daß der Quotient Q der Spannungen U_{M} und U_{K} nicht durch den Einfluß der Umgebungstemperatur verfälscht ist.

Das Verfahren wird so durchgeführt, daß der Laserstrahl 17 relativ schnell über die Drähte 10, 11 hin- und herbewegt wird. Läuft der Laserstrahl beispielsweise 100 mal über die Drähte 10, 11 hinweg, so ist die Temperaturschwankung insbesondere auch im Meßdraht 10 vergleichsweise gering, weil die Drähte 10, 11 eine hohe thermische Zeitkonstante von z.B. 250 ms aufweist. Währenddessen wird die von den Drähten 10, 11 aufgenommene Strahlungsleistung durch Konvektionskühlung an die Umgebung derart abgegeben, daß sich eine konstante Temperatur einstellt, so daß sich dementsprechend konstante Meßwerte ergeben. Der von der Anzeigeeinrichtung 33 angezeigte Wert ist daher ein Mittelwert der Strahlungsleistung, gemesssen über den gesamten Strahlquerschnitt.

Das erfindungsgemäße Verfahren hat diverse Vorteile. Insbesondere kann die Laserleistung praktisch an jeder Stelle des Strahlführungssystems gemessen werden, also auch unmittelbar über dem Werkstück. Als einzige Voraussetzung muß der Strahldurchmesser groß gegenüber dem Drahtdurchmesser sein, damit die Abschattung und damit die vom Meßdraht absorbierte Laserleistung nicht zu groß ist.

Die Messung kann ohne Probleme während der Bearbeitung erfolgen, die keine Rückwirkungen auf das Meßergebnis hat. Insbesondere ist der Meßdraht unempfindlich gegenüber Verschmutzung und sehr preiswert. Er ist leicht an die verschiedenen Strahlgeometrien anzupassen und sein Meßbereich läßt sich durch Bestimmung des Absorptionsgrads seiner Oberfläche, den Drahtdurchmesser sowie durch eine erzwungene Gasströmung an die Strahlintensität bzw. an die Laserleistung anpassen. Es ist nicht erforderlich, einen Draht als Sensor zum Messen zu benutzen. Geeignet ist vielmehr auch jede andere Ausführungsform, die einen nur geringen Anteil der Laserleistung absorbiert. In einem solchen Fall müssen das Meßelement und das Kompensationselement dieselbe Ausgestaltung haben.

## Patentansprüche

1. Verfahren zum Messen der Laserleistung, bei dem ein elektrisch beaufschlagbarer, einen temperaturabhängigen elektrischen Widerstand aufweisender Meßdraht (10) hin- und hergehend quer über den Strahlquerschnitt relativbewegt wird,
**dadurch gekennzeichnet,** daß der Meßdraht (10) in einer seine thermische Zeitkonstante (τ) wesentlich unterschreitenden Zeit relativ zum Strahlquerschnitt bewegt wird, daß ein dem Meßdraht (10) dicht parallel benachbarter, ebenfalls elektrisch beaufschlagbarer und einen temperaturabhängigen elektrischen Widerstand aufweisender Kompensationsdraht (11) verwendet wird, der einen im Vergleich zum Meßdraht (10) geringen Absorptionsgrad für die Laserstrahlung hat, und daß die Meßwerte beider Drähte (10, 11) ermittelt und ihr Quotient (Q) als von der Konvektionskühlung beider Drähte (10, 11) unabhängiges Maß der Laserleistung errechnet wird.

2. Verfahren nach Anspruch 1,
**dadurch gekennzeichnet,** daß der Meßstrom in beiden Drähten (10, 11) konstant gehalten und die infolgedessen an den Drähten (10, 11) abfallenden Spannungen (U_{M;}U_{K}) als Meßwerte zur Quotientenbildung herangezogen werden.

3. Verfahren nach Anspruch 1 oder 2,
**dadurch gekennzeichnet**, daß der Meßstrom in den Meßdraht (10) eine im Vergleich zur von letzterem absorbierten Laserstrahlleistung geringe Leistung einbringt.

4. Verfahren nach Anspruch 3,
**dadurch gekennzeichnet,** daß der Kompensationsstrom in den Kompensationsdraht (11) eine im Vergleich zur von letzterem absorbierten Laserstrahlleistung hohe Leistung einbringt.

5. Verfahren nach einem oder mehreren der Ansprüche 2 bis 4,
**dadurch gekennzeichnet,** daß von den an den Drähten (10, 11) abfallenden Spannungen (U_{M;}U_{K}) jeweils eine aufgrund der Umgebungstemperatur abfallende Grundspannung (Uᵤ) vor der Quotientenbildung abgezogen wird.

6. Vorrichtung zum Messen der Laserleistung, mit einem elektrisch beaufschlagten, einen temperaturabhängigen elektrischen Widerstand aufweisenden Meßdraht, der hin- und hergehend quer über den Strahlquerschnitt relativbeweglich ist,
**dadurch gekennzeichnet,** daß dem Meßdraht (10) dicht parallel benachbart ein einen temperaturabhängigen elektrischen Widerstand aufweisender Kompensationsdraht (11) angeordnet ist, daß die beiden Drähte (10, 11) jeweils einen unterschiedlichen Absorptionsgrad für die Laserstrahlung haben, daß beide Drähte (10, 11) jeweils an eine Stromquelle (12) und an ein Meßgerät (13) angeschlossen sind, und daß eine die Meßwerte der Meßgeräte (13) verarbeitende Dividierschaltung (14) mit nachgeschalteter Anzeigeeinrichtung (15) vorhanden ist.

7. Vorrichtung nach Anspruch 6,
**dadurch gekennzeichnet,** daß die Stromquelle (12) eine Konstantstromquelle ist, und daß die Meßgeräte (13) Spannungsmesser sind.

8. Vorrichtung nach Anspruch 6 oder 7,
**dadurch gekennzeichnet**, daß sie im Schwenkbereich (16) eines hin- und herbewegten Laserstrahls (17) stationär angeordnet ist.

9. Vorrichtung nach Anspruch 8,
**dadurch gekennzeichnet,** daß die Drähte (10, 11) schräg zur relativen Schwenkbahn des Laserstrahls (17) angeordnet sind.

10. Vorrichtung nach einem oder mehreren der Ansprüche 6 bis 9,
**dadurch gekennzeichnet,** daß als Meßdraht (10) ein geschwärzter und als Kompensationsdraht (11) ein blanker Nickeldraht gleicher Abmessungen vorhanden ist.

11. Vorrichtung nach einem oder mehreren der Ansprüche 6 bis 10,
**dadurch gekennzeichnet**, daß im Relativbewegungsbereich der Drähte eine erzwungene Gasströmung vorhanden ist.

12. Vorrichtung nach einem oder mehreren der Ansprüche 6 bis 11, **dadurch gekennzeichnet,** daß außerhalb des relativen Schwenkbereichs (16) des Laserstrahls (17) ein elektrisch beaufschlagter, einen temperaturabhängigen Widerstand aufweisender Referenzdraht (18) vorhanden und an die Meßgeräte (13) in die Schwankungen der Umgebungstemperatur ausgleichender Weise angeschlossen ist.

## Claims

1. A process for measuring laser power, wherein an electrically actuable measuring wire (10) having a temperature-resistant electrical resistance is subjected to a relative reciprocatory movement transversely over the beam cross-section, characterized in that the measuring wire (10) is moved in relation to the beam cross-section in a time substantially shorter than its thermal time constant (τ); a parallel compensation wire (11) is used which is closely adjacent to the measuring wire (10) and which is also electrically actuable and has a temperature-dependent electrical resistance and which has a degree of absorption of the laser radiation which is low in comparison with the measuring wire (10); and the measured values of the two wires (10, 11) are determined and their quotient (Q) is calculated as a measure of the laser power independent of the convectional cooling of the two wires (10, 11).

2. A process according to claim 1, characterized in that the measuring current is kept constant in the two wires (10, 11), and the voltages (U_{M}; U_{K}) consequently dropping at the wires (10, 11) are used as the measured values for forming the quotient.

3. A process according to claims i or 2, characterized in that the measuring current introduces into the measuring wire (10) a power which is low in comparison with the laser beam power absorbed thereby.

4. A process according to claim 3, characterized in that the compensation current introduces into the compensation wire (11) a power high in comparison with the laser beam power absorbed thereby.

5. A process according to one or more of claims 2 to 4, characterized in that prior to the formation of the quotient, a base voltage (Uᵤ) dropping due to the ambient temperature is deducted from each of the voltages (U_{M}: U_{K}) dropping at the wires (10, 11).

6. A device for measuring laser power, having an electrically actuable measuring wire or the like which has a temperature-dependent electrical resistance and which is subjected to a relative reciprocatory movement transversely over the beam cross-section, characterized in that a parallel compensation wire (11) having a temperature-dependent electrical resistance is disposed closely adjoining the measuring wire (10); each of the two wires (10, 11) has a different degree of absorption of laser radiation; each of the two wires (10, 11) is connected to a current source (12) and a measuring apparatus (13); and a dividing circuit (14) with connected display device (15) is provided which processes the measured values of the measuring apparatuses (13).

7. A device according to claim 6, characterized in that the current source (12) is a constant current source, and the measuring apparatuses (13) are voltmeters.

8. A device according to claims 6 or 7, characterized in that it is disposed fixed in the pivoting range (16) of a reciprocated laser beam (17).

9. A device according to claim 8, characterized in that the wires (10, 11) are disposed at an inclination to the relative pivoting path of the laser beam (17).

10. A device according to one or more of claims 6 to 9, characterized in that the measuring wire (10) used is a blackened wire, the compensation wire (11) being a bright nickel wire having the same dimensions.

11. A device according to one or more of claims 6 to 10, characterized in that a constrained gas flow is provided in the range of relative movement of the wires.

12. A device according to one or more of claims 6 to 11, characterized in that an electrically actuated reference wire (18) having a temperature-dependent resistance is provided outside the relative pivoting zone (16) of the laser beam (17) and is connected to the measuring apparatuses (13) in a manner equalizing the fluctuations of the ambient temperature.

## Revendications

1. Procédé de mesure de la puissance d'un laser, selon lequel on soumet un fil métallique de mesure (10), agencé de façon à pouvoir être alimenté en courant électrique et possédant une résistance électrique dépendant de la température, à un mouvement relatif dans un sens et dans l'autre et transversal sur l'étendue de la section transversale du faisceau, caractérisé en ce qu'on déplace le fil métallique de mesure (10) vis-à-vis de la section transversale du faisceau en un temps qui est très inférieur à sa constante de temps thermique (τ), en ce qu'on utilise un fil métallique de compensation (11) qui est étroitement adjacent et parallèle au fil métallique de mesure (10) et est aussi agencé de façon à pouvoir être alimenté en courant électrique et qui possède une résistance électrique dépendant de la température, ainsi qu'un degré d'absorption du rayonnement laser qui est faible en comparaison de celui du fil métallique de mesure (10),et en ce que les valeurs mesurées fournies par les deux fils métalliques (10, 11) sont relevées et leur quotient (Q) est calculé de façon à constituer une mesure de la puissance du laser qui est indépendante du refroidissement par convection des deux fils métalliques (10,11).

2. Procédé suivant la revendication 1, caractérisé en ce qu'on maintient constant le courant de mesure passant dans les deux fils métalliques (10, 11) et en ce qu'on utilise comme valeurs mesurées pour former le quotient les tensions (U_{M} ; U_{K}) se présentant de ce fait entre les bornes des fils métalliques (10, 11).

3. Procédé suivant l'une des revendications 1 et 2, caractérisé en ce que le courant de mesure apporte au fil métallique de mesure (10) une puissance qui est faible en comparaison de la puissance de rayonnement laser absorbée par ce fil métallique de mesure (10).

4. Procédé suivant la revendication 3, caractérisé en ce que le courant de compensation apporte au fil métallique de compensation (11) une puissance qui est élevée en comparaison de la puissance de rayonnement laser absorbée par ce fil métallique de compensation (11).

5. Procédé suivant l'une des revendications 2 à 4, caractérisé en ce qu'avant de former le quotient, on retranche de chacune des tensions (U_{M} ; U_{K}) se présentant entre les bornes de chaque fil métallique (10, 11) une chute de tension de base (Uᵤ) qui est due à la température ambiante.

6. Dispositif de mesure de la puissance d'un laser, comprenant un fil métallique de mesure qui est alimenté en courant électrique et possède une résistance électrique dépendant de la température et qui peut être soumis à un déplacement relatif dans un sens et dans l'autre et transversal sur l'étendue de la section transversale du faisceau, caractérisé en ce qu'un fil métallique de compensation (11), possédant une résistance électrique dépendant de la température, est disposé d'une manière étroitement juxtaposée et parallèle au fil métallique de mesure (10), en ce que les deux fils métalliques (10. 11) possèdent des degrés respectifs d'absorption du rayonnement laser qui sont différents, en ce que les fils métalliques (10, 11) sont raccordés chacun à une source de courant (12) et à un appareil de mesure (13),et en ce qu'il est prévu un circuit diviseur (14) qui traite les valeurs mesurées fournies par les appareils de mesure (13) et en aval duquel est monté un dispositif d'affichage (15).

7. Dispositif suivant la revendication 6, caractérisé en ce que la source de courant (12) est une source de courant constant et en ce que les appareils de mesure (13) sont des voltmètres.

8. Dispositif suivant l'une des revendications 6 et 7, caractérisé en ce qu'il est disposé d'une manière fixe dans la zone de balayage (16) d'un faisceau laser (17) à déplacement dans un sens et dans l'autre.

9. Dispositif suivant la revendication 8, caractérisé en ce que les fils métalliques (10, 11) sont disposés d'une manière inclinée vis-à-vis de la trajectoire oscillante relative du faisceau laser (17).

10. Dispositif suivant l'une des revendications 6 à 9, caractérisé en ce que, comme fil métallique de mesure (10), il est prévu un fil de nickel noirci et, comme fil métallique de compensation (11), un fil de nickel brillant.

11. Dispositif suivant l'une des revendications 6 à 10, caractérisé en ce qu'un écoulement forcé de gaz est prévu dans la zone de déplacement relatif des fils métalliques.

12. Dispositif suivant l'une des revendications 6 à 11, caractérisé en ce qu'un fil métallique de référence (18), agencé de façon à pouvoir être alimenté en courant électrique et possédant une résistance dépendant de la température, est disposé à l'extérieur de la zone d'oscillation relative (16) du faisceau laser (17) et est raccordé aux appareils de mesure (13) d'une manière compensant les fluctuations de la température ambiante.
